Europäisches Patentamt

European Patent Office

Office européen des brevets

(19)

(11) Numéro de publication : **0 459 885 B1**

(12) ## FASCICULE DE BREVET EUROPEEN

(45) Date de publication du fascicule du brevet :
10.05.95 Bulletin 95/19

(51) Int. Cl.⁶ : **G02B 23/12,** G02B 23/08

(21) Numéro de dépôt : **91401364.4**

(22) Date de dépôt : **28.05.91**

(54) **Episcope multi-fonction à faible encombrement.**

(30) Priorité : **01.06.90 FR 9006874**

(43) Date de publication de la demande :
**04.12.91 Bulletin 91/49**

(45) Mention de la délivrance du brevet :
**10.05.95 Bulletin 95/19**

(84) Etats contractants désignés :
**CH DE GB IT LI NL SE**

(56) Documents cités :
**EP-A- 0 192 309**
**EP-A- 0 193 236**
**EP-A- 0 412 828**
**DE-A- 2 704 185**
**FR-A- 2 273 291**

(73) Titulaire : **THOMSON-TRT DEFENSE**
**Rue Guynemer**
**F-78280 Guyancourt (FR)**

(72) Inventeur : **Espie, Jean-Luc**
**THOMSON-CSF**
**SCPI**
**Cédex 67**
**F-92045 Paris la Défense (FR)**

(74) Mandataire : **Lincot, Georges et al**
**THOMSON-CSF,**
**SCPI,**
**B.P. 329,**
**50, rue Jean-Pierre Timbaud**
**F-92402 Courbevoie Cédex (FR)**

EP 0 459 885 B1

Jouve, 18, rue Saint-Denis, 75001 PARIS

EP 0 459 885 B1

## Description

Le domaine de l'invention est celui de la vision épiscopique.

Plus précisément, l'invention concerne un épiscope multi-fonction, pouvant notamment permettre la vision de jour avec des moyens optiques classiques, et la vision de nuit, par exemple par l'intermédiaire d'un tube intensificateur de lumière.

L'invention trouve une application particulière dans les appareils d'observation pour véhicules blindés, et notamment pour chars de combat. Plus généralement, l'épiscope de l'invention peut être utilisé dans tous les cas où il est nécessaire d'isoler l'observateur du domaine observé, et où il est utile de disposer d'une part de moyens de vision directe par voie optique, et d'autre part de moyens de visualisation électroniques, comprenant par exemple un intensificateur de lumière, un détecteur infrarouge ou une caméra, avec capteur CCD ou autre.

Dans le cas particulier des véhicules blindés, le pilote dispose, pour la vision de jour, d'un épiscope optique classique, dit voie de jour, comprenant un réflecteur d'entrée recevant les rayons lumineux, et un réflecteur de sortie restituant les rayons lumineux au pilote. Selon le type d'épiscope, le trajet des rayons lumineux entre les deux réflecteurs peut être direct ou subir une ou plusieurs réflexions.

La voie de jour assure une vision optimale, tant que l'éclairement est suffisant. En revanche, elle ne permet pas le pilotage de nuit. Il n'est pas possible en effet, au moins en position de combat, d'utiliser des moyens d'éclairage intégrés au véhicule. Il est donc nécessaire d'utiliser une voie de nuit électronique, comprenant par exemple un objectif, un tube intensificateur de lumière et un oculaire.

Le passage d'un mode de vision à l'autre nécessite donc l'échange d'épiscopes. Cette opération de démontage et de remontage est très préjudiciable pour le véhicule blindé. En effet, pendant quelques minutes, il est privé de tout moyen de vision. Il est alors très vulnérable, et pour éviter tout risque, est obligé de se retirer et de se cacher pendant l'échange d'épiscopes.

Un autre problème posé par cette technique est le stockage de l'épiscope non utilisé dans l'habitacle du véhicule, dans lequel l'espace est le plus souvent très restreint. De plus, cet épiscope non utilisé court de gros risques de détérioration, s'il n'est pas convenablement arrimé.

Par ailleurs, l'opération d'échange d'épiscopes entraîne une perte ponctuelle d'étanchéité. En particulier, le véhicule n'est alors plus protégé contre les risques nucléaires, bactériologiques et chimiques. Plus généralement, les démontages et remontages successifs peuvent modifier les conditions d'étanchéité, notamment au niveau de l'usure des joints.

L'utilisation de deux épiscopes indépendants pour le jour et la nuit pose également des problèmes dans les périodes d'éclairement intermédiaire, telles que l'aube et le crépuscule, ou lorsque certaines zones sont éclairées et d'autres non. Le temps de changement important d'un mode de vision à l'autre ne permet pas d'être en permanence dans les conditions optimales de vision.

De façon à supprimer cette opération d'échange, on a imaginé des épiscopes jour-nuit, comprenant dans un même boîtier une voie de jour classique et une voie de nuit à intensificateur de lumière. Ainsi, le document de brevet allemand DE-2 704 185 et les documents de brevets EP-A-0 192 309 et EP-A-0 193 236 présentent des épiscopes à voie de jour et voie de nuit sensiblement parallèles, le réflecteur d'entrée étant mobile, et dirigeant les rayons lumineux vers l'une des deux voies, selon la position sélectionnée par le pilote.

Ces épiscopes jour-nuit évitent les nombreux problèmes posés par l'échange d'épiscopes. Toutefois, d'autres problèmes apparaissent. L'orifice percé dans le blindage pour l'épiscope doit être suffisamment grand pour permettre le passage des deux voies et des moyens de commande du réflecteur mobile. Or, cet orifice est clairement une partie vulnérable du blindage, qu'il est donc souhaitable de réduire au maximum. La présence d'éléments mobiles à l'extérieur du blindage est également un facteur de vulnérabilité. Par ailleurs, de tels épiscopes ne peuvent être implantés, en remplacement, sur des véhicules ne disposant que d'un épiscope de jour, du fait de l'ouverture trop faible existant dans le blindage.

L'invention a pour objectif de pallier ces inconvénients de l'état de la technique.

Plus précisément, un objectif de l'invention est de fournir un épiscope jour-nuit nécessitant un orifice percé dans le blindage de taille le plus faible possible, et en particulier, un orifice de taille similaire à celle nécessaire pour le passage d'un simple épiscope de jour.

Un objectif particulier est de fournir un tel épiscope jour-nuit assurant une étanchéité maximum au niveau du blindage.

L'invention a également pour objectif de fournir un tel épiscope ne présentant pas de pièces mobiles à l'extérieur du blindage et, plus généralement, peu de pièces mobiles.

Un autre objectif de l'invention est de fournir un tel épiscope occupant un volume le plus restreint possible, de façon à pouvoir être implanté dans de nombreux véhicules différents, tout en laissant suffisamment d'espace libre au pilote. En effet, l'espace disponible pour un épiscope, par exemple, dans un char de combat, est

2

très limité. Il faut notamment tenir compte, au-dessus du blindage, du passage de la tourelle et des étriers de protection, et au-dessous du blindage, de la proximité du volant, de la configuration et la position ouverte de la porte, de la position de conduite du pilote en configuration "tête dehors",...

Plus généralement, l'épiscope de l'invention a également pour objectif de respecter les contraintes d'ergonomie, tant en ce qui concerne le positionnement du prisme de sortie de la voie de jour et le l'oculaire de la voie de nuit, qu'en ce qui concerne les moyens de commutation d'une voie à l'autre.

L'invention a aussi pour objectif de fournir un épiscope comprenant d'une part un épiscope optique classique et d'autre part des moyens de visualisation électronique pouvant comprendre un intensificateur de lumière, des fibres optiques. un capteur CCD, une caméra thermique, etc...

Ces objectifs, ainsi que d'autres qui apparaîtront par la suite, sont atteints selon l'invention à l'aide d'un épiscope multi-fonction, notamment pour véhicule blindé, comprenant un dispositif de vision optique, à base de réflecteurs d'entrée et de sortie, au moins un dispositif de visualisation électronique, par exemple pour la vision de nuit, et tel que caractérisé dans la revendication 1.

De façon avantageuse, l'épiscope est du type traversant le blindage dudit véhicule, le réflecteur d'entrée dudit dispositif de vision optique étant extérieur audit véhicule.

Ainsi, la partie de l'épiscope extérieure au véhicule est réduite au maximum, et identique à celle émergeant dans le cas d'un épiscope de jour simple. Il ne se pose pas de problèmes d'étanchéité particuliers, et l'adaptation à des véhicules existants est aisée. La partie mobile est limitée, et située à l'intérieur du véhicule, sous le blindage.

Préférentiellement, lesdits moyens de réflexion mobiles comprennent un miroir, maintenu par un étrier mobile, et des moyens de guidage dudit étrier entre lesdites positions extrêmes.

L'étrier mobile est configuré de façon à ne pas interférer avec les rayons lumineux, quelque soit sa position.

Dans un mode de réalisation avantageux, lesdits moyens de guidage comprennent un jeu d'au moins une biellette, disposées de façon à assurer un débattement horizontal et vertical minimum dudit miroir au cours de la course de déplacement entre lesdites positions extrêmes.

En effet, il est important de réduire tous les débattements des pièces mobiles, de façon à minimiser l'encombrement global de l'épiscope.

Cela permet à nouveau de réduire l'encombrement. De plus, il est ainsi possible de diminuer la longueur totale de la voie électronique, et donc de placer l'oculaire ou l'écran de visualisation de cette voie juste sous le réflecteur de sortie de la voie de jour, ce qui assure un bon confort visuel pour l'observateur.

Avantageusement, ledit objectif comprend un jeu de lentilles traitées multi-couches et un prisme.

De façon préférentielle, l'hypothénuse dudit prisme est traité de façon à améliorer le bilan de transmission dudit objectif, selon au moins un des traitements suivants :
- argenture ;
- aluminiure améliorée ;
- multidiélectrique optimisé pour une incidence moyenne de 45°.

Dans un mode de réalisation avantageux, ledit objectif comprend un verre de champ entre ledit prisme et lesdits moyens de traitement électroniques, la face concave dudit verre de champ étant traitée multi-couches.

Dans un mode de réalisation particulier de l'invention, ledit objectif a une ouverture d'environ F/1, une focale paraxiale d'environ 26 mm, un champ objet d'environ 45° et un champ image d'un diamètre d'environ 20 mm.

Avantageusement, ledit objectif a une bande spectrale utile élargie, comprise entre environ 450 nm et 900 nm.

Pour faciliter le passage d'une voie à l'autre, l'épiscope comprend de façon avantageuse des moyens de commande de passage desdits moyens de réflexion d'une desdites positions extrêmes à l'autre, lesdits moyens de commande assurant conjointement la mise en ou hors fonction desdits moyens de traitement électroniques.

Dans un mode de réalisation particulier de l'invention, permettant la vision de jour et de nuit, ledit dispositif de visualisation électronique est une voie à intensification de lumière, comprenant un objectif à grande ouverture, un tube intensificateur et une optique bioculaire.

Dans un autre mode de réalisation de l'invention, lesdits moyens de réflexion mobiles comprennent un réflecteur, par exemple du type prisme réfléchissant à section triangulaire, solidaire dudit objectif, l'ensemble moyens de réflexion mobiles-objectif pouvant pivoter autour d'un axe sensiblement perpendiculaire au plan défini par ledit ensemble. Cela nécessite une augmentation de la largeur de l'épiscope, mais permet, par l'utilisation d'un prisme à haut indice, d'augmenter le champ de vision de nuit.

D'autres caractéristiques et avantages de l'invention apparaîtront à la lecture de la description suivante d'un mode de réalisation préférentiel de l'invention, donnée à titre illustratif et non limitatif, et des dessins annexés, dans lesquels :

- les figures 1 et 2 sont des représentations en coupe d'un épiscope jour-nuit selon l'invention, respectivement en position de vision de jour et en position de vision de nuit ;
- la figure 3 est un schéma d'un objectif à grande ouverture coudé, tel qu'utilisé dans les épiscopes des figures 1 et 2.

Le mode de réalisation décrit ci-dessous concerne spécifiquement un épiscope jour-nuit, dont la voie de nuit comprend un tube intensificateur de lumière.

Toutefois, il est clair que l'invention peut s'appliquer à d'autres moyens de traitement des rayons lumineux. Ainsi, les rayons lumineux détournés par le miroir amovible peuvent être reçus par un objectif de caméra, l'image étant restituée sur un écran de visualisation.

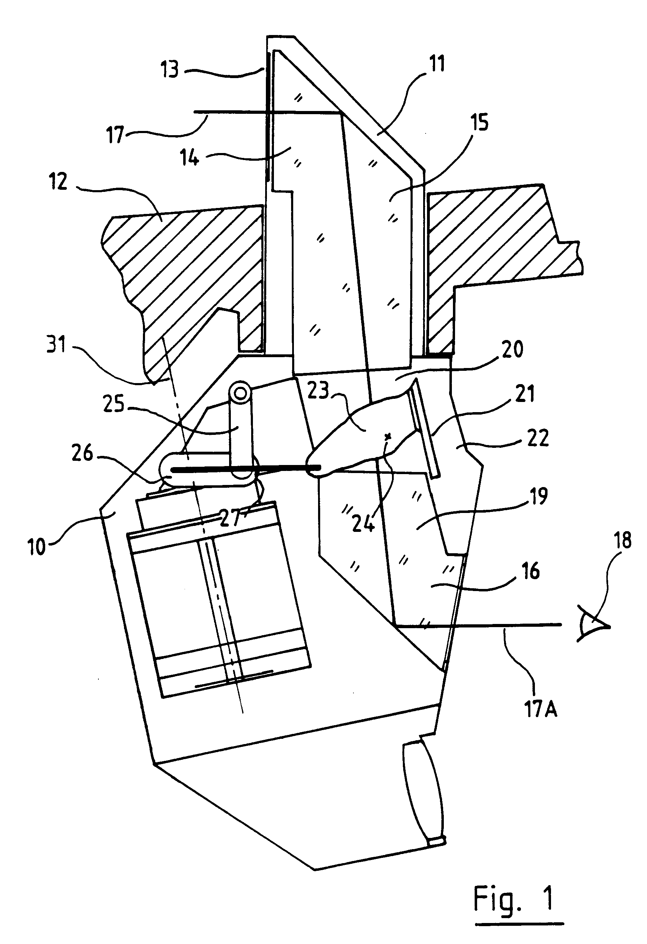

Le schéma de la figure 1 présente un épiscope jour-nuit, notamment destiné à des véhicules blindés, tels que des chars de combat.

Cet épiscope comprend un boîtier 10, contenant les deux voies de jour et de nuit. Le boîtier comprend une partie supérieure 11, extérieure au blindage 12 du véhicule, et fermée par un hublot 13. Ce hublot 13 peut comprendre des moyens de dégivrage, par exemple par un traitement interférentiel antiréfléchissant conducteur ou une sérigraphie résistive.

La partie 11 extérieure au blindage comprend un réflecteur 14 unique fixe, commun aux voies de jour et de nuit, qui est avantageusement un prisme de section triangulaire à réflexion totale ou dont l'hypothénuse a reçu un traitement réfléchissant (aluminiure, argenture ou traitement diélectrique). Ce réflecteur peut également être un miroir.

Le prisme 14 est collé à un prisme 15 de forme générale parallélépipédique, traversant le blindage 12. Les prismes 14 et 15 peuvent également former un prisme unique.

On notera que les parties extérieure et traversante ne comprennent que des moyens optiques fixes, identiques à ceux existant dans les épiscopes de jour simple. Cela permet d'assurer une parfaite interchangeabilité des matériels, pour peu que la partie inférieure du boîtier ne soit pas trop encombrante. Un tel épiscope peut donc remplacer sans problème des épiscopes de jour dans la plupart des véhicules blindés existants.

La partie inférieure du boîtier 10, sous le blindage 12, comprend les compléments des voies de jour et de nuit, et les moyens de commutation d'une voie à l'autre.

La voie de jour comprend, outre les prismes 14 et 15, un réflecteur 16 de sortie, qui peut avantageusement être un prisme de section triangulaire, qui dirige les rayons lumineux 17A vers le pilote 18. Ce prisme 16 peut être à réflexion totale ou dont l'hypothénuse a reçu un traitement réfléchissant (aluminiure, argenture ou traitement diélectrique).

Un prisme 19 de forme parallélépipédique est collé à ce prisme triangulaire 16. Les deux prismes parallélépipédiques 15 et 19 sont séparés par un espace 20, dans lequel peut se déplacer le miroir escamotable 21. Les prismes 16 et 19 peuvent également constituer un prisme unique.

Ainsi, en vision de jour, les rayons lumineux 17 traversent successivement un premier prisme 14, un premier prisme 15 parallélépipédique, un espace d'air 20, un second prisme 19 parallélépipédique et un second prisme 16.

L'image vue par le pilote 18 est sensiblement équivalente à celle obtenue par l'intermédiaire d'un épiscope classique, à prisme parallélépipédique unique, sans espace d'air 20. En effet, cet espace 20, de faible largeur, n'amène pas de réduction de champ importante, celle-ci pouvant être compensée en utilisant pour ces prismes un indice plus élevé que d'habitude, 1,62 par exemple.

De façon évidente, la voie de jour peut, dans un autre mode de réalisation, être plus complexe, et comprendre par exemple plus de deux déviations des rayons lumineux.

En position de vision de jour, le miroir escamotable 21 est logé sensiblement parallèlement au prisme 19, dans un espace 22 aménagé à cet effet.

Ce miroir est maintenu par un étrier 23, mobile autour d'un axe 24.

L'étrier 23 est conformé de façon à ne pas influer sur le trajet des rayons lumineux. La position de l'axe 24 a été choisie précisément, de façon que le déplacement du miroir 21 nécessite un minimum de débattement horizontal et vertical, permettant ainsi de réduire le plus possible l'espace 20 entre les deux prismes 15 et 19, et l'espace 22 de logement du miroir en position jour.

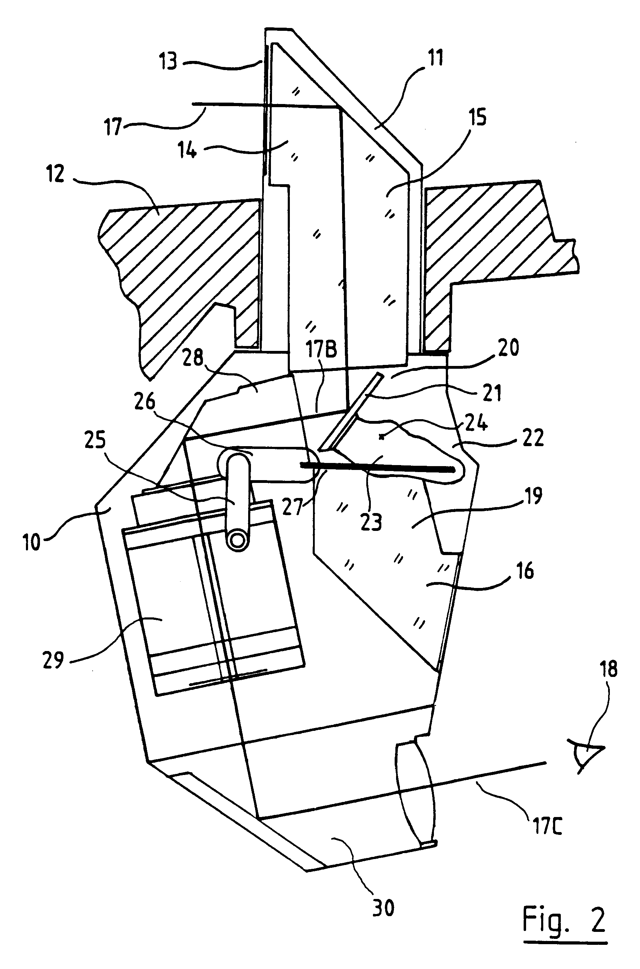

La commutation d'une voie à l'autre est assurée par une manette 25, pouvant pivoter d'un demi-tour. La position haute de la manette correspond à la voie de jour, et la position basse (figure 2) correspond à la voie de nuit.

Cette manette 25 entraîne autour de son axe une bielle 26, sur lequel est fixée da façon excentrique une première extrémité d'une biellette 27, dont la seconde extrémité est fixée à l'étrier 23 de maintien du miroir.

Un demi-tour de la manette vers le bas provoque donc le passage du miroir 21 de la position de jour (figure 1), à la position de nuit (figure 2). Inversement, le retour en position haute de la manette 25 entraîne le retour à la voie de jour.

Le passage en position basse de la manette 25 entraîne, à l'aide par exemple d'un commutateur actionné par une came solidaire de la manette, la mise en marche automatique des moyens de traitement électronique, tel qu'un tube intensificateur de lumière. Ainsi, en une seule commande, le pilote passe de la voie de jour à la voie de nuit. Inversement, le retour à la voie de jour entraîne l'arrêt de ces moyens électroniques.

Une autre solution pour effectuer la commutation jour-nuit consiste à rendre solidaire le miroir 21 de l'objectif 28, et à faire tourner l'ensemble objectif 28 - miroir 21 selon un axe 31, de façon à dégager, par rotation de 90° par exemple, l'espace situé entre les prismes 15 et 19 pour permettre la vision de jour.

Le miroir 21 peut alors être remplacé par un prisme réfléchissant de section triangulaire.

Cette configuration nécessite d'augmenter la largeur de l'épiscope, mais permet notamment, par l'utilisation d'un prisme à haut indice en remplacement du miroir 21, d'augmenter le champ de vision de nuit.

La figure 2 présente l'épiscope de l'invention en position de nuit. Le miroir escamotable 21 se trouve alors placé entre les deux prismes parallélépipédiques 15 et 19, dans l'espace d'air 20, de façon à diriger les rayons lumineux 17B vers un objectif à grande ouverture 28.

Il est à noter que les prismes d'entrée 14 et 15 sont communs aux deux voies de jour et de nuit.

La voie de nuit est, dans le mode de réalisation préférentiel décrit, une voie à intensification de lumière.

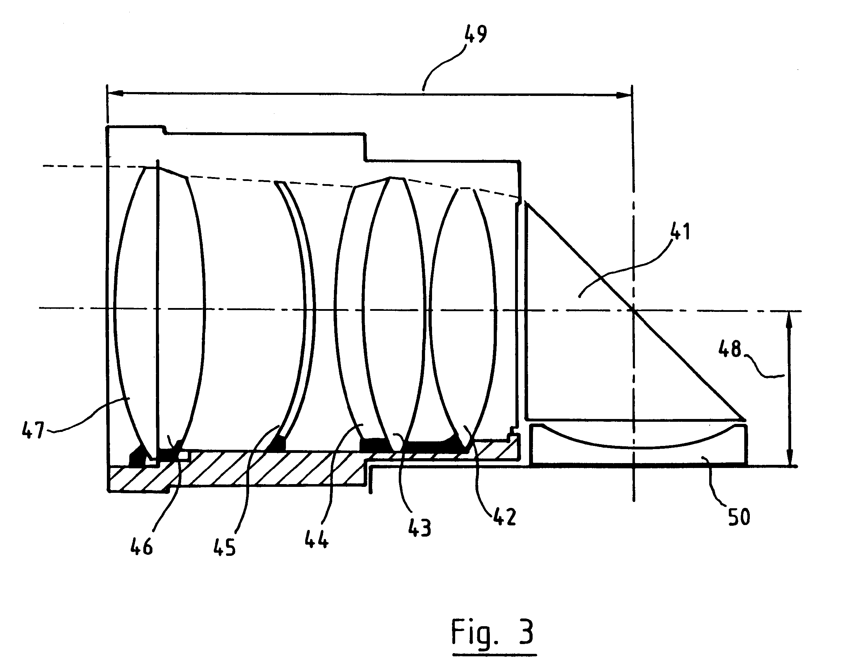

Avantageusement, l'objectif 28 est un objectif coudé, tel que décrit plus précisément plus loin en liaison avec la figure 3.

Cet objectif coudé permet de positionner le tube 29 intensificateur de lumière, nécessaire à la vision de nuit, suffisamment haut dans le boîtier 10 pour que l'oculaire 30 dans lequel se forme l'image 17C puisse être placé à proximité du prisme de sortie 16, de façon à assurer le confort visuel du pilote 18.

Le tube intensificateur 29 peut être d'un type quelconque disponible dans le commerce. Avantageusement, il s'agit d'un tube de deuxième génération, à focalisation électrostatique et à galette de microcanaux, tel que, par exemple, le tube TH9311, commercialisé par THOMSON-CSF (marque déposée), le tube XX1380, commercialisé par PHILIPS (marque déposée), ou le tube MX9644/UV, commercialisé notamment par THOMSON-CSF (marque déposée).

L'oculaire 30 est avantageusement un binoculaire unique, pouvant présenter par exemple une pupille de sortie d'environ 80 mm de diamètre, de façon à offrir un grand confort d'observation. Ce binoculaire a un champ apparent de l'ordre de 45°, ce qui correspond à un champ objet de la voie de nuit de 45°, pour un grossissement global d'environ 1.

Le binoculaire 30 peut être directement couplé au tube intensificateur 29, en reprenant l'image donnée sur l'écran de ce dernier. Toutefois, pour simplifier le binoculaire ou augmenter le confort d'observation, ce couplage peut être effectué par l'intermédiaire d'une fibre optique grandisseuse, permettant par exemple de passer d'un diamètre d'écran de tube 29 à un diamètre d'entrée de binoculaire supérieur, de 40 mm par exemple.

L'utilisation d'une fibre optique indépendante du tube intensificateur permet de donner une légère courbure à la face de sortie de la fibre, de façon à améliorer la qualité du binoculaire 30, et notamment la courbure de champ.

Le binoculaire 30 peut également être équipé de moyens de désembuage, tels qu'une résistance chauffante placée dans l'oculaire, ou un traitement interférentiel conducteur déposé sur une face de la lentille d'oeil du binoculaire, dont la température est régulée par thermostat à environ 35°.

L'objectif 28 coudé permet de réduire de façon importante l'encombrement global de l'épiscope. La figure 3 présente un mode de réalisation particulier d'un tel objectif.

Il s'agit d'un objectif à grande ouverture, de l'ordre de F/1, coudé à 90° au voisinage de l'image. La bande spectrale utile couvre un spectre élargi, correspondant au domaine visible et au proche infra-rouge. Elle est comprise entre environ 450 et 900 nm.

Cet objectif permet de former l'image d'un objet ou d'un paysage situé entre l'infini et 10 mètres sur la photocathode du tube 29 intensificateur d'images.

Le coude à 90° est réalisé par un prisme 41, de 21 mm de côté. Ce prisme 41 est intégré à la combinaison optique, qui comprend également six lentilles 42 à 47 et une lentille de champ 50.

Cette combinaison optique permet d'obtenir les caractéristiques optiques suivantes :
- focale paraxiale : 26,2 mm
- ouverture : F/1,0
- champ objet : 45°
- champ image : ø 20 mm (ce qui correspond à une distorsion en bord de champ de - 7,3 %).

La table 1 présente l'ensemble des dioptres utilisés dans cet objectif, en précisant leurs épaisseurs, rayons, indices et diamètres utiles.

La distance 48 entre l'axe optique et le tube intensificateur vaut 15 mm, et la longueur 49 de l'avant de l'objectif à l'axe est inférieure à 51 mm.

Le diamètre utile maximum est 26,2 mm à l'avant, au niveau de la pupille et se réduit à moins de 25 mm dans la zone située au-dessus du tube.

Les traitements employés pour les six lentilles 41 à 47 sont des multi-couches optimisés pour les hauts indices. Les verres employés ont une absorption négligeable au-dessus de 450 nm vu la faible épaisseur traversée.

La transmission est ainsi supérieure à 90 % dans toute la bande spectrale 450 nm - 850 nm, pour l'objectif seul.

Le prisme 41 subit les mêmes traitements multi-couches sur ses faces d'entrée et de sortie. L'hypothénuse du prisme ne peut pas travailler en réflexion totale, en raison de l'ouverture importante. Il est donc nécessaire d'employer un traitement à haute efficacité pour ne pas pénaliser le bilan de transmission global. On peut notamment utiliser l'un des traitements suivants : argenture, aluminure améliorée ou multidiélectrique optimisée pour une incidence moyenne de 45°.

L'objectif comprend également, entre le prisme 41 et la photocathode du tube intensificateur 29 de lumière, un verre de champ 50 collé sur le tube intensificateur. La face concave de ce verre de champ 50 est également traitée multi-couche. la face plane est laissée nue, en raison du collage.

Ainsi que cela a déjà été précisé, le dispositif de traitement électronique des rayons lumineux n'est pas limité à un intensificateur de lumière. Il peut par exemple s'agir de tout type de capteurs de caméras, permettant une visualisation sur un écran de type télévision, et particulièrement sur un écran plat. On peut notamment utiliser les capteurs CCD à bas niveau de lumière très performants ou un ensemble constitué d'un tube intensificateur couplé (par fibre optique par exemple) à un capteur CCD. Il est possible, dans ce cas, d'utiliser plusieurs écrans de façon par exemple que d'autres passagers du véhicule blindé puissent également observer l'extérieur. Par ailleurs, on peut alors envisager la visualisation d'images provenant d'autres senseurs, tels que des caméras de recul, des caméras thermiques, et d'informations complexes, tels que des cartes, de jour comme de nuit.

Dans un mode de réalisation particulier de l'invention, il est possible que le miroir escamotable puisse prendre une ou plusieurs positions intermédiaires entre les deux positions extrêmes, de façon à diriger les rayons lumineux vers plusieurs dispositifs électroniques distincts.

## TABLE I

| | EPAISSEURS | RAYONS | INDICES | DIAMÈTRES UTILES | |
|---|---|---|---|---|---|
| 1 | | 37.935 | | 26.20 | 0.00 |
| | 4.088 | | 1.721 | | |
| 2 | | 282.080 | | 25.60 | 0.00 |
| | 4.664 | | 1.000 | | |
| 3 | | -46.741 | | 24.30 | 0.00 |
| | 9.903 | | 1.667 | | |
| 4 | | -29.622 | | 23.90 | 0.00 |
| | 1.074 | | 1.000 | | |
| 5 | | -26.065 | | 23.20 | 0.00 |
| | 1.624 | | 1.667 | | |
| 6 | | 35.550 | | 23.20 | 0.00 |
| | 2.851 | | 1.000 | | |
| 7 | | 36.329 | | 25.80 | 0.00 |
| | 6.276 | | 1.783 | | |
| 8 | | -42.028 | | 24.70 | 0.00 |
| | .202 | | 1.000 | | |
| 9 | | 26.363 | | 23.60 | 0.00 |
| | 6.994 | | 1.709 | | |
| 10 | | -28.633 | | 22.90 | 0.00 |
| | 1.949 | | 1.905 | | |
| 11 | | 0.000 | | 22.00 | 0.00 |
| | .700 | | 1.000 | | |
| 12 | | 0.000 | | 22.00 x 21.00 | |
| | 21.000 | | 1.871 | | |
| 13 | | 0.000 | | 20.00 x 19.00 | |
| | 3.370 | | 1.000 | | |
| 14 | | -18.173 | | 19.00 | 0.00 |
| | 1.134 | | 1.667 | | |
| 15 | | 0.000 | | 20.00 | 0.00 |
| | 0.000 | | 1.000 | | |

## Revendications

1. Episcope multi-fonction, notamment pour véhicule blindé (12), comprenant un dispositif de vision optique, à base de réflecteurs d'entrée (14) et de sortie (16), au moins un dispositif de visualisation électronique (29) et des moyens de réflexion (21) entre deux positions extrêmes, caractérisé en ce que, entre le réflecteur d'entrée (14) et le réflecteur de sortie (16) dudit dispositif de vision optique, la première position des moyens de réflexion mobiles (21) permet la libre circulation des rayons lumineux (17, 17A) entre lesdits réflecteurs d'entrée (14) et de sortie (16), et la seconde position provoque la déviation desdits rayons (17, 17B, 17C) lumineux vers le dispositif de visualisation électronique (29), et en ce que ledit dispositif de visualisation électronique comprend un objectif (28; 41-47, 50) à grande ouverture présentant un coude d'environ 90° au voisinage de l'image.

2. Episcope selon la revendication 1, caractérisé en ce que lesdits moyens de réflexion mobiles comprennent un miroir (21), maintenu par un étrier (23) mobile, et des moyens (26, 27) de guidage dudit étrier (23) entre lesdites positions extrêmes.

3. Episcope selon la revendication 2, caractérisé en ce que lesdits moyens de guidage comprennent un jeu d'au moins une biellette (27), disposées de façon à assurer un débattement horizontal et vertical minimum dudit miroir (21) au cours de la course de déplacement entre lesdites positions extrêmes.

4. Episcope selon la revendication 1, caractérisé en ce que ledit objectif (28) comprend un jeu de lentilles (42-47) traitées multi-couches et un prisme (41).

5. Episcope selon la revendication 4, caractérisé en ce que l'hypothénuse dudit prisme (41) est traité de façon à améliorer le bilan de transmission dudit objectif, selon au moins un des traitements suivants:
   - argenture;
   - aluminure amélioré;
   - multidiélectrique optimisé pour une incidence moyenne de 45°.

6. Episcope selon l'une quelconque des revendications 4 ou 5, caractérisé en ce que ledit objectif (28) comprend un verre de champ (50) entre ledit prisme et lesdits moyens de traitement électroniques, la face concave dudit verre de champ (50) étant traitée multi-couches.

7. Episcope selon l'une quelconque des revendications précédentes, caractérisé en ce que ledit objectif (28) a une ouverture d'environ F/1, une focale paxaxiale d'environ 26 mm, un champ objet d'environ 45° et un champ image d'un diamètre d'environ 20 mm.

8. Episcope selon l'une quelconque des revendications précédentes, caractérisé en ce que ledit objectif (28) a une bande spectrale utile élargie, comprise entre environ 450 nm et 900 nm.

9. Episcope selon l'une quelconque des revendications précédentes, caractérisé en ce qu'il comprend des moyens (25) de commande de passage desdits moyens de réflexion d'une desdites positions extrêmes à l'autre, lesdits moyens (25) de commande assurant conjointement la mise en ou hors fonction desdits moyens (29) de traitement électroniques.

10. Episcope selon l'une quelconque des revendications précédentes, caractérisé en ce que ledit dispositif de visualisation électronique est une voie intensification de lumière, comprenant ledit objectif (28) à grande ouverture, un tube intensificateur (29) et une optique binoculaire (30).

11. Episcope selon l'une quelconque des revendications précédentes, caractérisé en ce que lesdits moyens de réflexion mobiles comprennent un réflecteur, par exemple du type prisme réfléchissant à section triangulaire, solidaire dudit objectif (28), l'ensemble moyens de réflexion mobiles-objectif pouvant pivoter autour d'un axe (31) sensiblement perpendiculaire au plan défini par ledit ensemble.


## Patentansprüche

1. Multifunktions-Episkop, insbesondere für ein gepanzertes Fahrzeug (12), das eine optische Sichtvorrichtung auf der Basis von Eingangs- und Ausgangsreflektoren (14, 16), mindestens eine elektronische Sichtvorrichtung (29) und zwischen zwei Endpositionen bewegliche Ablenkmittel (21) aufweist, dadurch gekennzeichnet, daß zwischen dem Eingangsreflektor (14) und dem Ausgangsreflektor (16) der optischen Sichtvorrichtung die erste Stellung der beweglichen Ablenkmittel (21) den freien Durchgang der Lichtstrahlen (17, 17A) zwischen dem Eingangs- und dem Ausgangsreflektor (14, 16) erlaubt, während die zweite Stellung die Ablenkung der Lichtstrahlen (17, 17B, 17C) zur elektronischen Sichtvorrichtung (29) hervorruft, und daß die elektronische Sichtvorrichtung ein Objektiv (28; 41 bis 47, 50) mit großer Öffnung enthält, das einen Knick von etwa 90° in Bildnähe aufweist.

2. Episkop nach Anspruch 1, dadurch gekennzeichnet, daß die beweglichen Reflexionsmittel einen Spiegel (21) enthalten, der von einem beweglichen Bügel (23) gehalten wird, sowie Führungsmittel (26, 27) für den Bügel (23) zwischen den beiden Endpositionen.

3. Episkop nach Anspruch 2, dadurch gekennzeichnet, daß die Führungsmittel mindestens eine Stange (27) enthalten, die so angeordnet ist, daß der Spiegel (21) während der Verschiebung zwischen den beiden Endpositionen möglichst wenig waagrecht und senkrecht ausgelenkt wird.

4. Episkop nach Anspruch 1, dadurch gekennzeichnet, daß das Objektiv (28) einen Satz von Linsen (42 bis 47), die mit mehreren Schichten versehen sind, und ein Prisma (41) enthält.

5. Episkop nach Anspruch 4, dadurch gekennzeichnet, daß die Hypothenuse des Prismas (41) so behandelt ist, daß die Durchlaßbilanz des Objektivs verbessert wird, und zwar mit Hilfe mindestens einer der folgenden Behandlungen:
   - Silberbeschichtung,
   - verbesserte Aluminiumbeschichtung,
   - optimiertes Multidielektrikum für einen mittleren Einfall von 45°.

6. Episkop nach einem beliebigen der Ansprüche 4 oder 5, dadurch gekennzeichnet, daß das Objektiv (28) ein Feldglas (50) zwischen dem Prisma und den elektronischen Verarbeitungsmitteln enthält, wobei die konkave Seite dieses Feldglases (50) mit mehreren Schichten belegt ist.

7. Episkop nach einem beliebigen der vorhergehenden Ansprüche, dadurch gekennzeichnet, daß das Objektiv (28) eine Öffnung von etwa F/1, eine paraxiale Brennweite von etwa 26 mm, ein Gegenstandsfeld von etwa 45° und einen Bildfeld-Durchmesser von etwa 20 mm besitzt.

8. Episkop nach einem beliebigen der vorhergehenden Ansprüche, dadurch gekennzeichnet, daß das Objektiv (28) ein erweitertes Nutzspektralband zwischen etwa 450 nm und 900 nm hat.

9. Episkop nach einem beliebigen der vorhergehenden Ansprüche, dadurch gekennzeichnet, daß es Mittel (25) zur Steuerung des Übergangs der Reflexionsmittel von einer Endstellung zur anderen aufweist, wobei diese Steuermittel (25) zugleich das Ein- und Ausschalten der elektronischen Verarbeitungsmittel (29) bewirken.

10. Episkop nach einem beliebigen der vorhergehenden Ansprüche, dadurch gekennzeichnet, daß die elektronische Sichtvorrichtung ein Kanal mit Lichtverstärkung ist, der das Objektiv (28) mit großer Öffnung, eine Verstärkerröhre (29) und eine Binokularoptik (30) besitzt.

11. Episkop nach einem beliebigen der vorhergehenden Ansprüche, dadurch gekennzeichnet, daß die beweglichen Reflexionsmittel einen mit dem Objektiv (28) verbundenen Reflektor enthalten, beispielsweise vom Typ eines reflektierenden Prismas mit Dreiecksquerschitt, wobei die Einheit aus beweglichen Reflexionsmitteln und Objektiv um eine im wesentlichen zu der durch diese Einheit definierten Ebene senkrechte Achse (31) schwenken kann.

## Claims

1. Multi-function periscope, especially for an armoured vehicle (12), comprising an optical vision device, based on entry (14) and exit (16) reflectors, at least one electronic visual display device (29) and reflection means (21) which are movable between two extreme positions, characterized in that, between the entry reflector (14) and the exit reflector (16) of the said optical vision device, the first position of the movable reflection means (21) allows free flow to the light rays (17, 17A) between the said entry (14) and exit (16) reflectors, and the second position causes deflection of the said light rays (17, 17B, 17C) towards the electronic visual display device (29) and in that the said electronic visual display device comprises a large-aperture objective (28; 41-47, 50) exhibiting a bend of about 90° in the vicinity of the image.

2. Periscope according to Claim 1, characterized in that the said movable reflection means comprise a mirror (21) held by a movable stirrup (23), and means (26, 27) of guiding the said stirrup (23) between the said extreme positions.

3. Periscope according to Claim 2, characterized in that the said guidance means comprise a set of at least one link rod (27), arranged in such a way as to provide a minimum vertical and horizontal travel for the said mirror (21) in the course of the displacement travel between the said extreme positions.

4. Periscope according to Claim 1, characterized in that the said objective (28) comprises a set of multilayer coated lenses (42-47) and a prism (41).

5. Periscope according to Claim 4, characterized in that the hypotenuse of the said prism (41) is coated so as to enhance the transmission budget of the said objective, according to at least one of the following treatments:
   - silvering;
   - enhanced aluminizing;
   - multidielectric optimized for an average incidence of 45°.

6. Periscope according to either of Claims 4 or 5, characterized in that the said objective (28) comprises a field glass (50) between the said prism and the said electronic processing means, the concave face of the said field glass (50) being multilayer-treated.

7. Periscope according to any one of the preceding claims, characterized in that the said objective (28) has an aperture of about F/1, a paraxial focal length of about 26 mm, an object field of about 45° and an image field with a diameter of about 20 mm.

8. Periscope according to any one of the preceding claims, characterized in that the said objective (28) has a widened useful spectral band lying between about 450 nm and 900 nm.

9. Periscope according to any one of the preceding claims, characterized in that it comprises means (25) of controlling the passage of the said reflection means from one of the said extreme positions to the other, the said control means (25) jointly placing the said electronic processing means (29) in or out of service.

10. Periscope according to any one of the preceding claims, characterized in that the said electronic visual display device is a light intensification channel, comprising the said large-aperture objective (28), an intensifier tune (29) and binocular optics (30).

11. Periscope according to any one of the preceding claims, characterized in that the said movable reflection means comprise a reflector, for example of the triangular-section reflecting-prism type, integral with the said objective (28), the mobile reflection means-objective assembly being able to pivot about an axis (31) substantially perpendicular to the plane defined by the said assembly.

Fig. 1

Fig. 2

Fig. 3